# EUROPEAN PATENT SPECIFICATION

(11) **EP 1 781 964 B1**
(45) Date of publication and mention of the grant of the patent: **26.06.2013**
(21) Application number: 05744026.5
(22) Date of filing: 27.05.2005
(51) Int. Cl.: F16G 13/02, F16G 13/06, F16H 7/06

(54) **CHAIN TRANSMISSION**
KETTENGETRIEBE
TRANSMISSION PAR CHAINE

(30) Priority: 26.07.2004 PL 36927904
(43) Date of publication of application: 09.05.2007
(73) Proprietor: Zbikowski, Jerzy Andrzej, 65-536 Zielona Gora (PL); Terelak, Marek Grzegorz, 59-220 Legnica (PL); Zbikowski, Zbigniew, 65-536 Zielona Gora (PL); Wrona, Radoslaw, 65-526 Zielona Gora (PL)
(72) Inventor: Zbikowski, Jerzy Andrzej, 65-536 Zielona Gora (PL); Terelak, Marek Grzegorz, 59-220 Legnica (PL); Zbikowski, Zbigniew, 65-536 Zielona Gora (PL); Wrona, Radoslaw, 65-526 Zielona Gora (PL)
(74) Representative: Tobiasz-Dumania, Katarzyna
(86) International application number: PCT/PL2005/000034
(87) International publication number: WO 2006/011820

(56) References cited:
- BE-A- 438 048
- DE-A1- 19 622 054
- DE-C- 54 663
- DE-C- 86 046
- US-A- 628 939
- US-A- 3 079 807

## Description

The subject of the invention concerns a chain transmission used in machine drives. A book of M. Dudziak "String transmission", WN PWN, Warsaw 1997, page 246-253 describes a chain transmission consisted of at least two sprockets partially encircled by a chain. A chain consists of a series of links connected through articulated joint. For correct positioning of the chain on the sprockets, its slight overhang is required, which is adjusted periodically or continuously by use of a tensioner. The tensioner allows correct operation of the transmission when the chain lengthens in course of time, mainly because of abrasive wear of its elements. Generally used in chain transmissions are roller pitch chains, consisting of alternately inner and outer links consisting of outer plates, pins, inner plates, sleeves and rollers. By using appropriately lengthened pins and putting outer and inner plates alternately on them, it is possible to build a multiple pitch chain.

Another common type of chain is the toothed roller chain, composed of appropriately shaped plates, each of them having two protrusions on one of longer edges, which are teeth corresponding in form with the sprocket teeth and building a chain transmission together with a chain; the second edge of the longer edges of the plate is smooth. The plates have two holes in which pins connecting adjoining chain links are located.

From patent abstract no. GB 230839 it is known a chain transmission, where the chain has each link equipped with two teeth on one side and is smooth on the other side. Ends of each chain link are formed like edges of sprockets teeth mating with them.

From patent abstract no. US 6440022 it is known mutual toothed chain containing in longitudinal and crosswise direction alternately laid first and second links. Each first chain link consists of odd number of connectors laid in crosswise direction of the chain, and each second chain link consists of even numbers of connectors and pins laid in crosswise direction, where each of them is adjusted to connect two opposite laid chain links. The connectors of first chain link and connectors of second chain link have the same side profile, so that on one side two teeth are laid and second side is smooth. On each first and second chain link teeth of the extreme connectors are directed outside and teeth of internal connectors are directed opposite.

From patent abstract no. US 2003/0017896 it is known toothed sprocket having chain transmitting power which consists of links. The sprocket has teeth radially protruding and spreading in distance of chain links length. The chain has two rows of driving and driven alternately laid links which are connected by pins. Both rows of links are alternated along the chain, so that lines of links of second row are laid between links from adjoining lines of first row, and lines of links from first row are laid between links from adjoining lines of second row.

From patent abstract no. W095/04889 it is known self-tightening driving chain, in which length of moving chain and its tension are constant despite changing distance between driving and driven sprockets. The tension is achieved by means of appropriately adjusting of off-centre free sprocket. The off-centre free sprocket presents axis for two arms set in "V" shape which support chain drive and linearly separate driven sprockets, which are set in the end of the arms, thereby enabling their appropriate tread. The off-centre free sprocket is encircled by chain at least in part of free toothed sprocket, both on side of driving sprocket and on side of driven sprocket.

From patent documents no. DE 196 22 054 A1 and DE 54 663 C a chain transmission is known, where a driven sprocket is not encircled by a chain.

From patent document no. DE 86 046 C a chain transmission is known, where a driving sprocket and a driven sprocket have different diameters and are both encircled by the chain.

Described solutions do not allow achieve the same rotational speed of toothed driving and driven sprockets of different diameters while transmitting power through one chain.

Free from described inconvenience is a chain transmission which contains two toothed sprockets, a chain and a tensioner, where according to the invention the centre of pitch circle of the driven sprocket lays outside of the circle inscribed in the part of chain mating with the sprocket according to claim 1.

In the chain transmission according to the invention the axis of the top pins lays outside of the plane determined by axes of the base pins of the link.

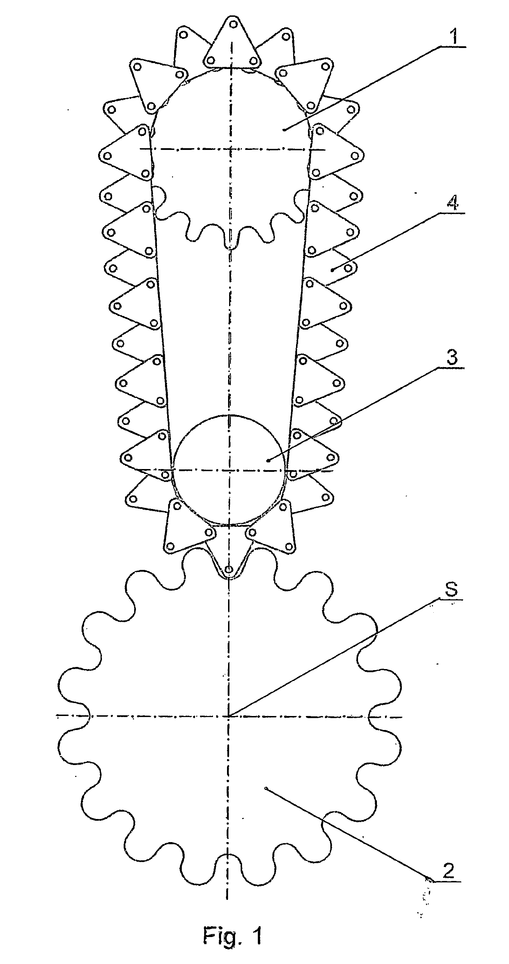

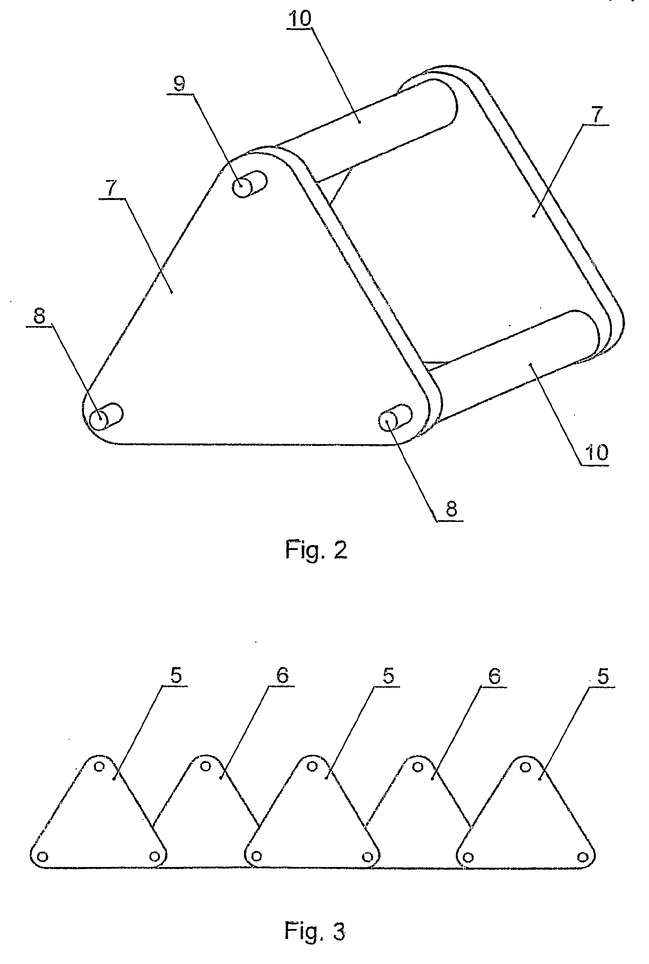

The chain transmission according to the invention allows to achieve the same rotational speed of toothed sprockets of different diameters while transmitting power through one chain. The subject of the invention is shown in examples in drawings, where fig.1 performs scheme of the chain transmission, fig. 2 performs a chain link in axonometric projection, fig. 3 performs view of a chain fragment.

The transmission is located in one plane: a driving toothed sprocket 1, driven toothed sprocket 2, tension roll 3, and chain 4. Sprockets 1 and 2 engage with each other by means of chain 4 encircling driving sprocket, tensioned and pressed against the driven sprocket 2 by tensioner 3, while the driving toothed sprocket 2 is not encircled by chain 4. Chain 4 consists of outer links 5 and inner links 6 laid alternately along the chain's 4 length. Each of links, 5 and 6, of chain 4 forms a pair of set parallel and triangle-like plates 7, connected together at their bases by two pins 8 and at their top by a pin 9. Between plates 7, rolls 10 are put onto two pins 8 and 9. Pins 8 at bases of plates 7 connect simultaneously two adjoining links 5 and 6 forming an articulated joint enabling to encircle sprocket 1 and tension roll 3.

The centre of pitch circle S of the driven sprocket 2 lays outside of the circle inscribed in the part of chain 4 mating with the sprocket 2. The diameter of the inscribed circle equals to diameter of the tighten circle 3. Both toothed sprocket, driving sprocket 1 and driven sprocket 2, have different module pitch at the same number of teeth and while operating, rotate with the same speed.

## Claims

1. A chain transmission comprising a driving toothed sprocket and a driven toothed sprocket, a chain and a tensioner, wherein the chain (4) consists of outer links (5) and inner links (6) laid alternately, where each of the links (5, 6) consists of a pair of the parallel and triangle-like plates (7) connected together at their bases by two pins (8) and at their top by a pin (9), the links (5, 6) further comprising rolls (10) wherein between the plates (7) the rolls (10) being arranged onto two pins (8, 9), wherein the toothed sprockets (1, 2) engage with each other by means of the chain (4) encircling the driving toothed sprocket (1) and tensioned and pressed against the driven toothed sprocket (2) by the tensioner (3), **characterized in that** the driven toothed sprocket (2) is not encircled by the chain (4) and the centre the driven toothed sprocket (2) lays outside the circle inscribed in the part of the chain (4) mating with the driven toothed sprocket (2), **in that** the chain transmission allows achieving the same rotational speed of both toothed sprockets of different diameters while transmitting power through the chain.

2. A chain transmission according to claim 1, **characterized in that** the axis of the pin (9) located at the top of the plates (7) lies outside the plane determined by the axes of the pins (8) located at the base of the plates (7) of the link (5, 6).

## Patentansprüche

1. Kettengetriebe mit einem treibenden Zahnkettenrad und einem getriebenen Zahnkettenrad, einer Kette und einem Spanner, wobei die Kette (4) aus abwechselnd gelegten äußeren Gliedern (5) und inneren Gliedern (6) besteht, wobei jedes der einzelnen Glieder (5, 6) aus einem Paar paralleler und dreieckartiger Platten (7) besteht, die an ihre Grundlinien mit zwei Stiften (8) und an ihrer Spitze mit einem Stift (9) miteinander verbunden sind, die Glieder (5, 6) ferner Hohlzylinder (10) aufweisen, wobei die Hohlzylinder (10) zwischen den Platten (7) auf zwei Stiften (8, 9) angeordnet sind, wobei die Zahnkettenräder (1, 2) mittels der Kette (4), die das treibende Zahnkettenrad (1) umläuft und von dem Spanner (3) gespannt und gegen das getriebene Zahnkettenrad (2) gedrückt wird, miteinander gekuppelt sind, **dadurch kennzeichnet, dass** das getriebene Zahnkettenrad (2) nicht von der Kette (4) umlaufen wird und die Mitte des getriebenen Zahnkettenrads (2) außerhalb eines Kreises liegt, der in den Teil der Kette (4) einbeschrieben ist, der in das getriebene Zahnkettenrad (2) eingreift, und dadurch, dass das Kettengetriebe es ermöglicht, für beide Zahnkettenräder, die unterschiedliche Durchmesser aufweisen, die gleiche Drehgeschwindigkeit zu erreichen, während durch die Kette Kraft übertragen wird.

2. Kettengetriebe nach Anspruch 1, **dadurch gekennzeichnet, dass** die Achse des an der Spitze der Platten (7) befindlichen Stifts (9) außerhalb der Ebene liegt, die von den Achsen der an der Grundlinie der Platten (7) des Glieds (5, 6) befindlichen Stifte (8) festgelegt ist.

## Revendications

1. Une transmission par chaîne comprenant un pignon denté d'entraînement et un pignon denté entraîné, une chaîne et un tendeur, où la chaîne (4) est constituée de maillons extérieurs (5) et de maillons intérieurs (6) assemblés alternativement où chaque maillon (5, 6) est constitué d'une paire de plaques triangulaires et parallèles (7) reliées les unes aux autres à leurs bases par deux épingles (8) et à leur sommet par une épingle (9), les maillons (5, 6) comprenant en outre des rouleaux (10) où, entre les plaques (7) les rouleaux (10) s'articulent sur deux épingles (8, 9), où les pignons dentés (1, 2) s'articulent ensemble au moyen de la chaîne (4) qui encercle le pignon denté d'entraînement (1), tendue et maintenue contre le pignon denté entraîné (2) par le tendeur (3), **caractérisé par le fait que** le pignon denté entraîné (2) n'est pas encerclé par la chaîne (4) et que le centre du pignon denté entraîné (2) repose à l'extérieur du cercle inscrit par la partie de la chaîne (4) accouplée avec le pignon denté entraîné (2), **par le fait que** la transmission par chaîne permet d'obtenir la même vitesse de rotation pour les deux pignons dentés de diamètres différents tout en transmettant la force par la chaîne.

2. La transmission par chaîne selon la revendication 1, **caractérisée par le fait que** l'axe de l'épingle (9) situé au sommet des plaques (7) se trouve à l'extérieur du plan constitué par les axes de l'épingle (8) située à la base des plaques (7) du maillon (5, 6).
